# EUROPEAN PATENT APPLICATION

(11) **EP 2 028 831 A2**
(43) Date of publication of application: **25.02.2009**
(21) Application number: 08251692.3
(22) Date of filing: 14.05.2008
(51) Int. Cl.: H04M 3/42

(54) **Systems and methods for multi-stream recording**

(30) Priority: 12.05.2008 US 118789; 24.08.2007 US 957736 P
(71) Applicant: Verint Americas Inc., Roswell, GA 30076 (US)
(72) Inventor: Williams, Jamie Richard, Fleet, Hampshire GU51 1EG (GB); Calahan, Marc, Woodstock, GA 30180 (US); Barnes, Robert John, Watford, Herts WD24 5JQ (GB)
(74) Representative: Bibby, William Mark

(57) **Abstract**

Included are embodiments for multi-stream recording. At least one embodiment of a method receiving an indication that a communication session is initiated, the communication session including communications data, the communications data being received at a communications device at an extension and sending a request for at least a portion of the communications data. Some embodiments include receiving, at a recording device associated with the extension, at least a portion of the requested data, the at least a portion of the requested data being received as a copy of the communications data.

## Description

### CROSS-REFERENCE TO RELATED APPLICATION

This application claims priority to U.S. Patent Application No. 60/957,736, filed August 24, 2007, entitled "SYSTEMS AND METHODS FOR MULTI-STREAM RECORDING," which is incorporated by reference in its entirety.

### TECHNICAL FIELD

This application relates to multi-stream recording and, more specifically to recording data in a communications network.

### BACKGROUND

As communications networks facilitate the communication of an increasingly large amount of data, various techniques have been utilized. While some techniques may be utilized for voice data, some techniques may facilitate the communication and/or recording of voice data, image data, video data, and/or content data. As such, larger amounts of network bandwidth may be utilized. Consequently, recording techniques may be desired to facilitate communication and/or recording of at least a portion of this data, while utilizing network bandwidth in an economical manner.

Additionally, recording in a network environment may provide issues with regard to routing, bandwidth utilization, malfunctioning equipment, *etc.* As such, network users and administrators desire efficient recording in such environments.

### SUMMARY

Included are embodiments for multi-stream recording. At least one embodiment of a method includes receiving an indication that a communication session is initiated, the communication session including communications data, the communications data being received at a communications device at an extension and sending a request for at least a portion of the communications data. Some embodiments include receiving, at a recording device associated with the extension, at least a portion of the requested data, the at least a portion of the requested data being received as a copy of the communications data.

Also included are embodiments of a system for multi-stream recording. As least one embodiment includes a sending component configured to send a request for communications data, the communications data being associated with a communication, the communications data being received at a communications device on a channel and a receiving component configured to receive, at a recording device associated with the channel, at least a portion of the requested data, the at least a portion of the requested data being received as a copy of the communications data.

Also included are embodiments of a computer readable medium for multi-stream recording. At least one embodiment includes sending logic configured to send a request for at least a portion of the communications data, the communications data being received at a communications device in a data stream and receiving logic configured to receive, at a recording device associated with the data stream, at least a portion of the requested data, the at least a portion of the requested data being received as a copy of the communications data.

Other systems, methods, features, and/or advantages of this disclosure will be or may become apparent to one with skill in the art upon examination of the following drawings and detailed description. It is intended that all such additional systems, methods, features, and advantages be included within this description and be within the scope of the present disclosure.

### BRIEF DESCRIPTION

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiment or embodiments disclosed herein. On the contrary, the intent is to cover all alternatives, modifications, and equivalents.

FIG. 1 is a diagram illustrating an exemplary embodiment of a network configuration for recording data via a client application.

FIG. 2 is a diagram illustrating an exemplary embodiment of a network configuration for dual channel recording using one extension, similar to the diagram from FIG. 1.

FIG. 3 is a diagram illustrating an exemplary embodiment of a network configuration for sharing at least one Internet Protocol (IP) endpoint, similar to the diagram from FIG. 2.

FIG. 4 is a diagram illustrating an exemplary embodiment of a network configuration for sharing at least one IP endpoint that is conferenced into at least one agent communication, similar to the diagram from FIG. 3.

FIG. 5 is a diagram illustrating an exemplary embodiment of a network configuration for utilizing Real Time Protocol (RTP) redirection, similar to the diagram from FIG. 4.

FIG. 6 is a diagram illustrating an exemplary embodiment of a network configuration for sharing a plurality of IP endpoints for an IP agent, utilizing an extension, similar to the diagram from FIG. 5.

FIG. 7 is a block diagram illustrating a plurality of components that may be utilized in a communications device, such as the communications device from FIG. 1.

FIG. 8 is a flowchart illustrating an exemplary process that may be utilized for a shadow extension receiving communications data.

FIG. 9 is a flowchart illustrating an exemplary process that may be utilized for determining priority of an extension, similar to the flowchart from FIG. 8.

FIG. 10 is a flowchart illustrating a process that may be utilized for receiving data related to an extension, similar to the diagram from FIG. 8.

FIG. 11 is a flowchart illustrating a process that may be utilized for recording data at an extension, similar to the flowchart from FIG. 10.

### DETAILED DESCRIPTION

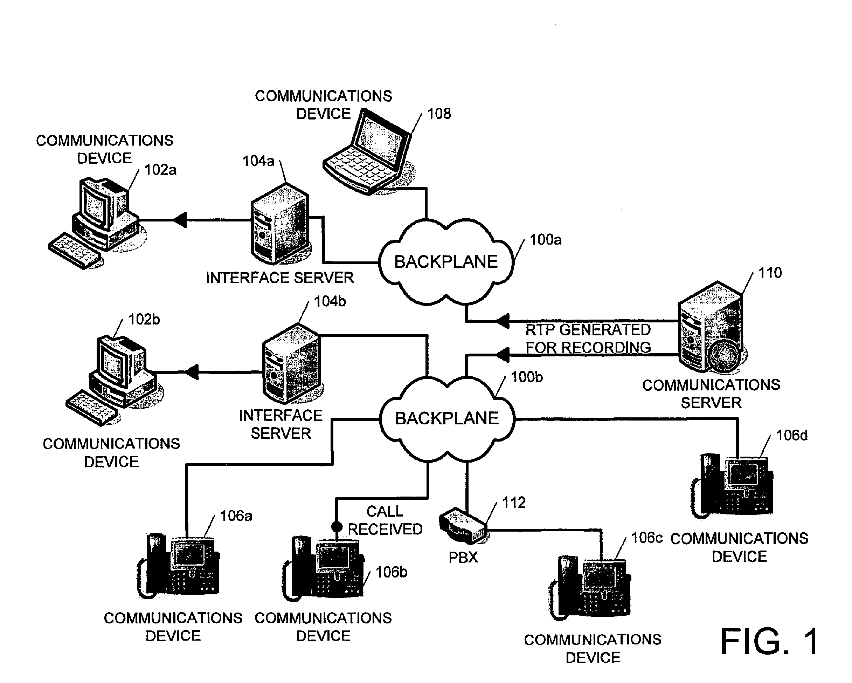

Included are embodiments for recording data in a communications network. More specifically, a communication session (which may be identified by a session identifier) between a communications application (e.g., via communications device 102a, FIG. 1) and an Interface server 104 (FIG. 1) can be used to obtain one or more device identifiers. A device identifier may be utilized to identify an extension. The Interface server 104 may be configured to set up a separate signaling channel to the communications server 110 (FIG. 1) for the device identifiers. If the communications application has requested media services, the communications server 110 can provide a valid Real Time Protocol (RTP) address for each device identifier during registration. When the extension (which may be associated with a device identifier) enters into a communication session, the communications server 110 can set up an RTP stream to the specified RTP address.

Additionally, high availability of device, media, and call control services can be achieved by allowing one or more Internet Protocol (IP) endpoints (e.g., communications device via one or more respective interface servers) to register with the communications server using the same extension. Any of these endpoints can control existing and new calls. An endpoint may be configured to determine actions of other IP endpoints.

However, some embodiments may be configured such that an IP endpoint may be prevented from receiving data associated with another IP endpoint. More specifically, in at least one exemplary embodiment, mute, speaker, and headset commands may be prevented from communication to other IP endpoints. Other embodiments may be configured for one-way communication and/or two-way communications among IP endpoints.

Similarly, in at least one embodiment, IP endpoints registering with the communications server may specify a desired media mode and/or dependency mode at the time of registration. More specifically, with regard to a dependency mode, if a communications device is designated as a main communications device, other endpoints (e.g., communications devices) can register with communications server using the same extension. The main endpoint does not depend on registration of any other IP endpoints using the same extension. Once involved in a communication session, the main endpoint can talk and listen. There is generally only one main endpoint registrant associated with an extension.

If the dependency mode is as an independent endpoint, the endpoint can originate and receive calls and can talk and listen even when the main endpoint has not registered. Endpoint registering in this mode has the capabilities of the main registrant until the main endpoint registers. When this occurs, the independent registrant will be placed in listen only-mode and the main endpoint may be given talking privileges. The main registrant (e.g., 102a) has precedence over independent registrant. This will be enforced even when the user is in a communication session.

Using the independent mode, the endpoints can specify the ability to make or receive calls even if the main endpoint (*e.g.,* communications device) is not available (e.g., due to network failure). An example where this mode can be useful is when a call recording application using a passive recording feature, uses two registrations for high availability. One would register as a main endpoint and the other as independent endpoint. In this case the communications server can allow either of these registrants to answer and/or initiate a communication session.

Similarly, the communications server may be configured to allow an endpoint to register in this mode only if another endpoint is registered to the communications server using the same extension in the main mode or the independent mode. Endpoints can register if the extension is associated with a communications device and the communications device is in-service. When in a communication session, the DCP communications device may be configured in a listen-only mode.

Similar to the dependency modes, a plurality of media modes may be designated for a communications network. More specifically, an endpoint may register with the communications server as a client media endpoint. In this configuration, the endpoint specifies to the communications server 110 to send an RTP stream when the corresponding extension is involved in a communication session. Similarly, an endpoint can register as a server media endpoint. In this mode, the endpoint requests interface server to handle received RTP streams. In a no media mode, the endpoint indicates to the communications server that the endpoint requests the ability to control the extension and is not interested in the media stream.

One should note that if an endpoint registers in the client media or server media mode, the communications server can allocate a Voice over Internet Protocol (VoIP) resource for each registrant when the extension is involved in a communication session.

Additionally, at least one embodiment can facilitate on-demand multi-stream recording. In such a scenario, a plurality of extensions may be utilized. One of the extensions may be utilized for the agent and the other for the service observe (which may be used for service observe and/or for single step conferencing). A plurality of respective communications applications can register to a plurality of different interface servers, using the service observer's extension (*e.g.,* the extension currently related to the communications device). The service observer audio streams can be forked to the service observer clients. There may be one main IP endpoint registration and one Independent registration for the service observing extension (or single step conference extension). For each of the additional shared station endpoints, communications server can fork a media stream associated with the service observing (or single step conference) extension. In this case the media streams associated with the independent IP endpoint are not summed into the call.

Embodiments disclosed herein may also facilitate permanent multi-stream recording. More specifically, in at least one embodiment, only one extension is utilized for recording network data. This extension may be allocated for the agent. A plurality of additional client applications can register with the communications server in a dependent mode with a client media designation via two interface servers using the agent's extension (e.g., an extension related to communications device). For each of the dependent endpoints, the communications server can fork a media stream associated with the agent user to those devices. In at least one embodiment, the communications device can be an IP hard phone and/or a DCP phone. The forked media streams by default are not summed into the call.

Additionally included herein are embodiments where one or more shadow devices are registered against a communications device for recording. When the communications device receives a call, the shadow device receives a copy of the information and can record at least a portion of the call. Depending on the configuration, if multiple shadow devices are registered for the device then all shadow device may receive duplicate information allowing redundant recording solutions to be built. Alternatively a failover mechanism may be deployed where, if the first shadow device fails, another registered shadow device begins receiving a copy of the communications data. That registered shadow device can record the received data from that point forward. If that shadow device fails, another registered shadow device can receive the data, and so on down a chain of registered shadow devices for a particular extension and/or device. Further the shadow devices may receive control information with only the failover data moving the RTP down the chain. This gives the further advantage to ensure that all shadows have the call state.

Similarly, some embodiments include selective recording using shadow devices for resilience. In at least one embodiment, the shadow devices may be used to provide resilience in a selective environment. More specifically, an extension may be used with the recorder to receive a conference call from an extension requesting a recording (and/or a silent observe request though other potential mechanisms exist for invoking a selective mechanism). Using shadow devices on this recorder extension, a fault tolerant system can be built such that the shadows are active, always receiving a copy of the primary recording extension. Similarly, the fault tolerant system may be built such that the shadow extensions are passive such that they take over, if the primary device fails. Shadow extensions may also be used just to provide a control mechanism for the extension without actually receiving the control signals or the audio signals. These types of extensions may be used to invoke the recording mechanism.

Additionally, so that the shadow devices can receive the duplicate information, different technologies might be invoked. More specifically, the primary devices that the shadow devices serve may be configured to duplicate media streams, control data and/or audio data. Where the devices themselves are configured without this capability to duplicate, then a resource such as a conference bridge may be used to send the information to the shadow devices. Similarly, some components in the network might be used to duplicate the information to the shadow devices. As a nonlimiting example, the gateways may be instructed to send the information to multiple shadow devices. Technologies such as redirection may be employed to pull the call back from a failed shadow device and send it to a secondary shadow device.

With regard to the drawings, FIG. 1 is a diagram illustrating an exemplary embodiment of a network configuration for recording data via a client application. More specifically, as illustrated in the nonlimiting example of FIG. 1, backplanes 100a and 100b may be configured to facilitate communications between a plurality of communications devices 102a, 102b, 106a, 106b, 106c, 106d, and 108. The backplanes 100 may be configured for Internet Protocol System Interface (IPSI) communications, and/or other communications. Additionally, the backplanes 100 may be configured to facilitate communications with a communications device (not shown) via the Internet, a Public Switched Telephone Network (PSTN) and/or via other Wide Area Networks (WANs).

The communications devices 102, 106, and/or 108 may be configured with a communications application, which may be configured to facilitate communications on the communications device. As a nonlimiting example, the communications application may be configured to implement softphone functionality and/or recording functionality, as described in more detail below.

Also included in the nonlimiting example of FIG. 1 are one or more interface servers 104a, 104b. More specifically, the interface servers 104 may be configured to provide an interface to facilitate one or more functions of initiating, receiving, maintaining, recording and/or terminating a communication session. Similarly, the communications server 110 may be configured to facilitate a communication session between two or more communications devices, as described in more detail below. Additionally, the communications device 108 may be embodied as a laptop computing device. Communications device 106c may be connected to a Private Branch Exchange (PBX) that may facilitate one or more local functions.

In operation, a call can be received and/or initiated at the communications device 106b. At least a portion of the data associated with the communication can be duplicated (which may include manipulation of at least a portion of the data, but this is not a requirement) and sent from the communications server 110 (as RTP data) to communications devices 102a and 102b for recording. One should note that in this nonlimiting example, as in others, communications devices 102a, 102b may be referred to as shadow devices, which receive data associated with a communication that another device receives.

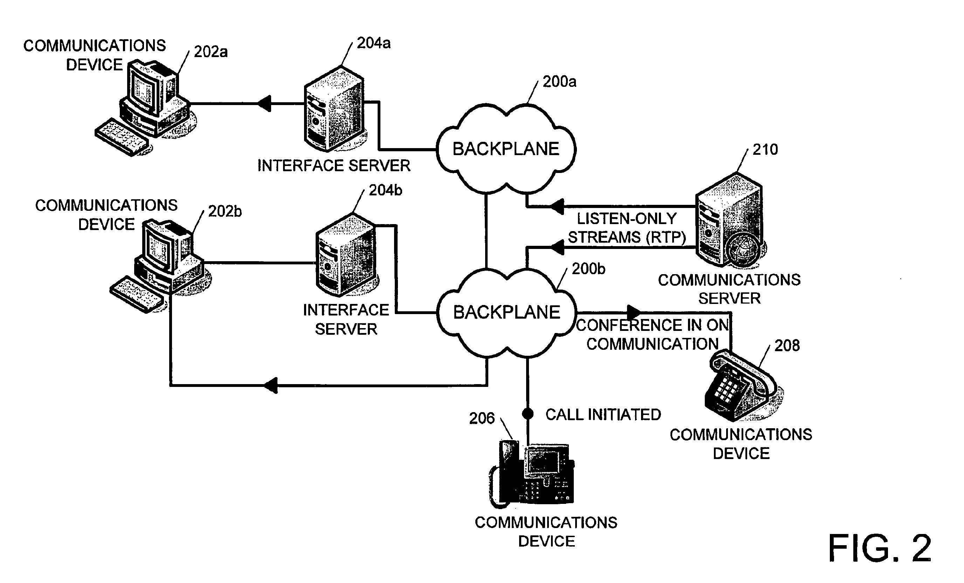

FIG. 2 is a diagram illustrating an exemplary embodiment of a network configuration for dual channel recording using one extension, similar to the diagram from FIG. 1. More specifically, as illustrated in the nonlimiting example of FIG. 2, backplanes 200a and 200b may facilitate communications with one or more users. The backplanes may be coupled to communications devices 202a, 202b, 206, 208 directly and/or via interface servers 204a and/or 204b. The communications devices 202, 206, 208 may be configured to conduct and/or record communications and may be embodied as hardware oriented communications devices (e.g., communications devices 206, 208) and/or as softphones (e.g., communications devices 202a, 202b). Regardless, the communications devices 202, 206, 208 may be configured with a communications application and/or a recording application for providing the desired functionality.

Similarly, the interface servers may be configured to facilitate a communications interface for managing communication sessions and/or recording data. The communications server 210 may facilitate communications with one or more of the communications devices 202, 206, 208, as described above.

In operation, a communications device (e.g., communications device 206) may be registered to the communications server 210. Additionally, two additional IP endpoints (e.g., communications devices 202a, 202b) may register as shadow devices in a dependent and client media mode to two different Interface servers 204a, 204b, but share a common extension (channel and/or data stream). When a communication session terminates on an agent 206, the communications server 210 can set up an RTP stream for each of the registered shadow devices associated with the extension (e.g., communications devices 202a, 202b). The voice data in the RTP streams is same as received by the main registrant (e.g., communications device 206), subject to a selected codec. The main registrant (e.g., communications device 206) may be registered with communications server 210 for the dependent registrants (e.g., communications devices 202a, 202b, which are associated with the same extension) to register. Additionally the communications device 208 may conference into the communication.

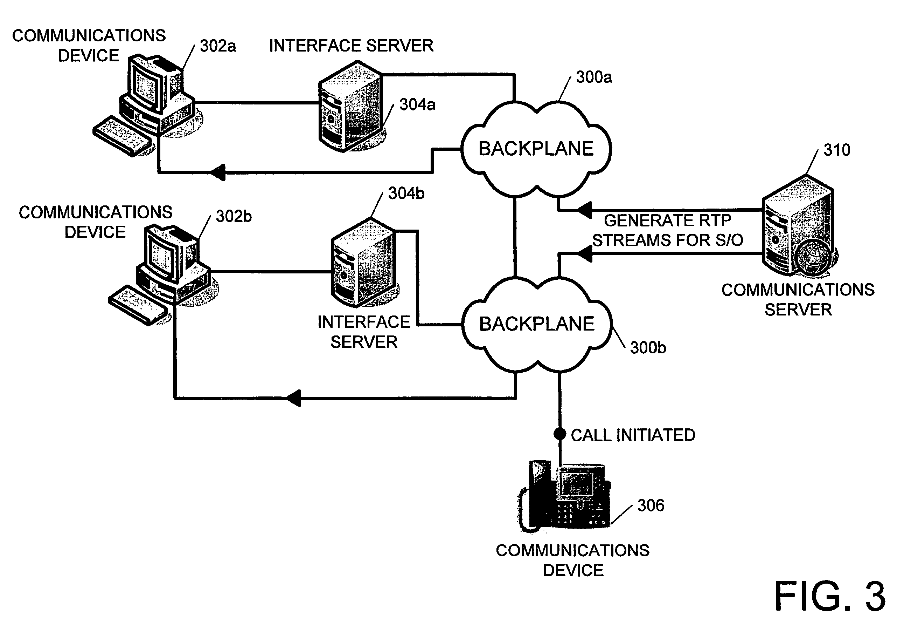

FIG. 3 is a diagram illustrating an exemplary embodiment of a network configuration for sharing at least one Internet Protocol (IP) endpoint, similar to the diagram from FIG. 2. As illustrated in the nonlimiting example of FIG. 3, backplanes 300a, 300b may be configured to facilitate communications with a communications server 310. Also included are communications devices 302a, 302b, and 306. The communications devices 302, 306 may be configured to participate and/or record data associated with a communication via interactions with an interface server 304a, 304b and/or directly with a backplane 300a, 300b. A communications server 310 may also be coupled to backplanes 300a, 300b to facilitate communications.

In operation, a plurality of extensions may be used. One extension may be associated with an agent (or the station to record, e.g., communications device 306) and a second extension (e.g., communications device 302a) for a service observer that will be service observing the agent 306. One communications application (e.g., one associated with shadow device 302a) can register in a main dependency mode and a client media mode. The other communications application (e.g., one associated with shadow device 302b) can register in an independent dependency mode and a client media mode using the service observer extension (e.g., the same extension associated with the communications device 302a). This configuration is useful for playing a tone into the communication session of communications device 306, for providing warning tones, etc.

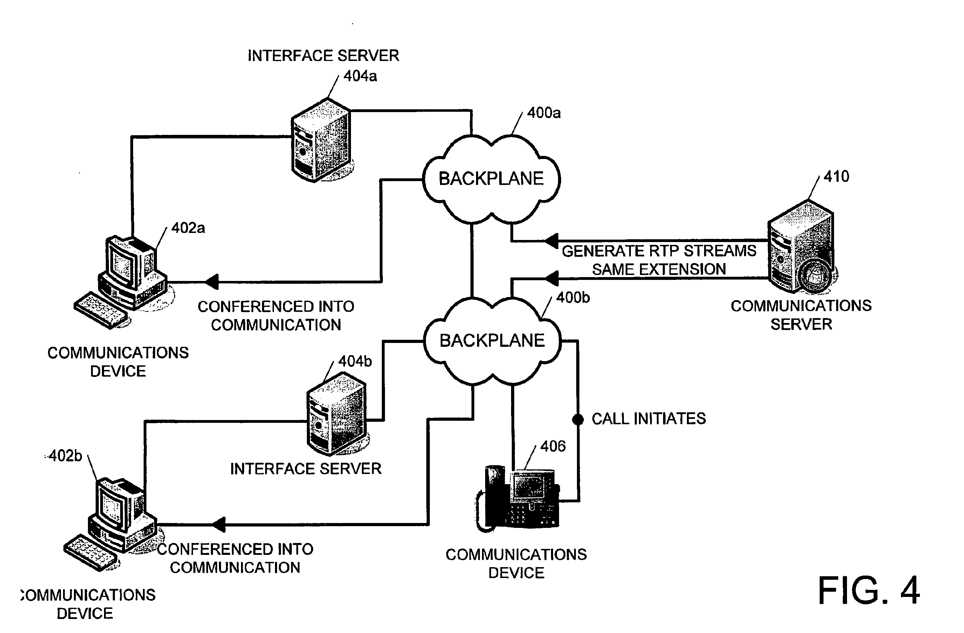

FIG. 4 is a diagram illustrating an exemplary embodiment of a network configuration for sharing at least one IP endpoint that is conferenced into at least one agent communication, similar to the diagram from FIG. 3. More specifically, as illustrated in the nonlimiting example of FIG. 4, backplanes may be configured to facilitate communications with a plurality of communications devices 402a, 402b, 406. While communications devices 402a, 402b may be coupled to interface servers 404a, 404b and/or directly to the backplanes 400a, 400b, respectively, the communications device 406 may be configured for clan communications and medpro communications via the backplane 400b. Additionally, the communications server 410 may be configured to facilitate communications among these components.

In operation, two extensions may be utilized. One extension may be associated with the agent for recording (e.g., communications device 406), where the communication session initiates. The other extension may be associated with a recording shadow device (such as on communications device 402a). Another client application (e.g., shadow device) may be configured to monitor the agent's extension (e.g., extension related to communications device 406) and when a communication session is accepted by the agent, conferences the recording client extension (e.g., the extension associated with the communications device 402a) to the call. One of the recording client applications (e.g., communications device 402a) registers to the second extension (e.g., at communications device 402a) as a main dependency mode with a client media mode and the other with an independent mode and client mode (e.g., communications device 402b). Each of these registrants will receive an RTP stream. However, in at least one exemplary embodiment, only one of the registrants is provided outgoing communications capabilities.

This configuration is useful for a client application playing a tone into the communication session, for providing warning tone, etc. One should also note that this accounts towards the number of parties that can be in a conference call. Additionally, since service observing is not used here, a real service observer can monitor this call.

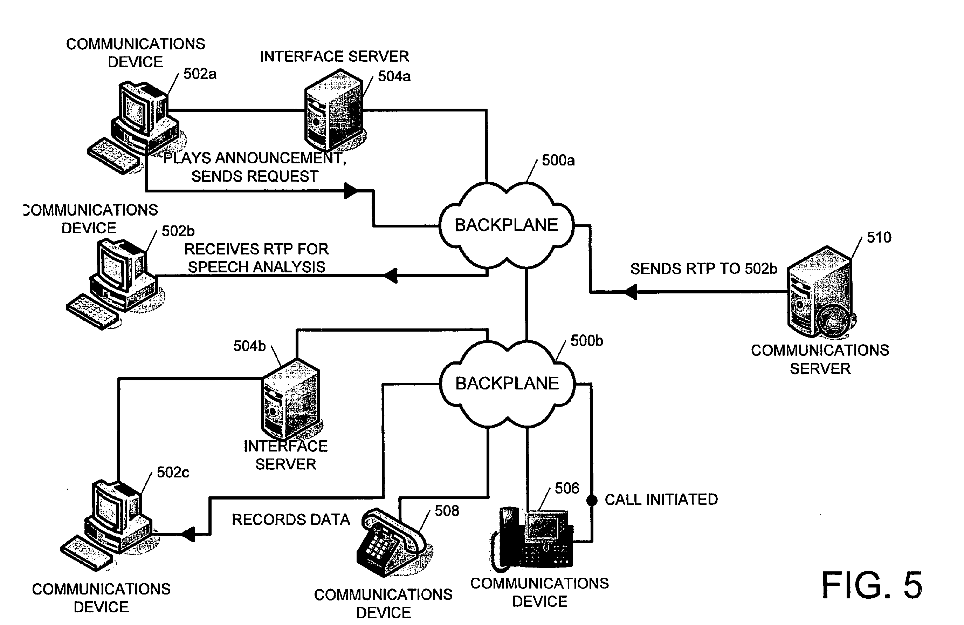

FIG. 5 is a diagram illustrating an exemplary embodiment of a network configuration for utilizing Real Time Protocol (RTP) redirection, similar to the diagram from FIG. 4. As illustrated in the nonlimiting example of FIG. 5, backplanes 500a, 500b may be configured to facilitate communications with communications devices 502a, 502b, 502c, 506, and 508. More specifically, the communications device 502a may be configured to communicate directly with the backplane 500a and/or with the backplane 500a via an interface server 504a. Similarly, the communications device 502c may be configured to communicate via the backplane 500b directly and/or via an interface server 504b. The communications device 508 may be configured to communicate via the backplane 500b directly.

In operation, using dynamic RTP, an IP endpoint (e.g., communications device 502c) can request the communications server 510 to send RTP traffic to a different destination (e.g., 502b) at any time. If the user is involved in a communication, the RTP stream can be redirected to the new destination. This could be used to play an announcement from one server and redirect the RTP data to a different server for speech recognition in the middle of a call.

As a nonlimiting example, a communication session may be initiated at a communications device 506. As such, the communications server 510 may send RTP data to the communications device 502c for recording (this may be in response to a request by the communications device 502c or other device to record this data, but this is not a requirement). The communications device (e.g., shadow device) can record the received data. Additionally, the communications server 510 may receive, from communications device 502a, a request to send at least a portion of the RTP data to the communications device 502b for performing speech analytics. The communications server 510 can then redirect and/or duplicate at least a portion of the data to provide the data to the communications device 502b.

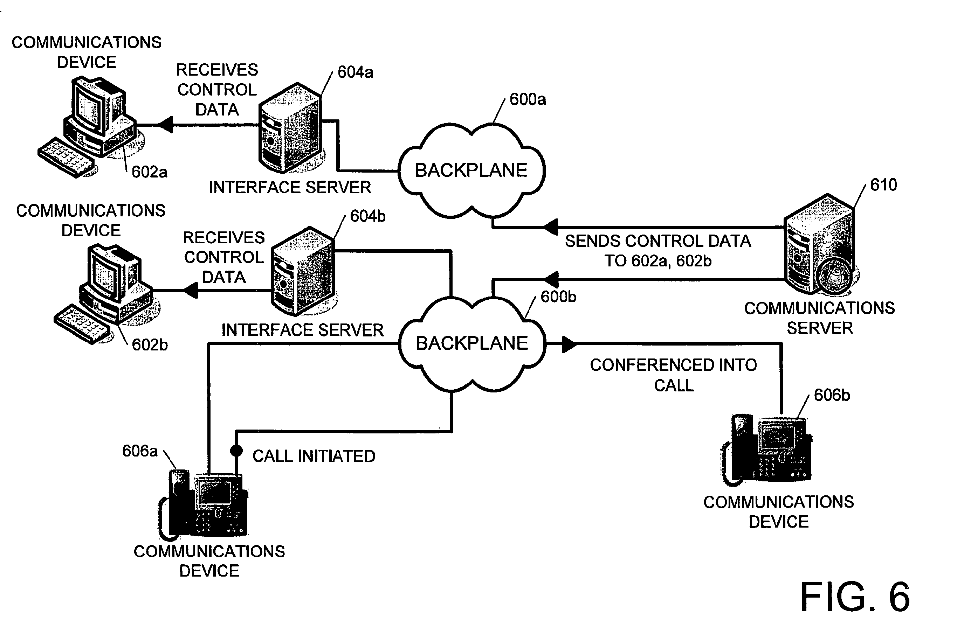

FIG. 6 is a diagram illustrating an exemplary embodiment of a network configuration for sharing a plurality of IP endpoints for an IP agent, utilizing an extension, similar to the diagram from FIG. 5. As illustrated in the nonlimiting example of FIG. 6, backplanes 600a, 600b may be configured to facilitate communications between communications devices 602a, 602b, 606a, and 606b. The communications devices 602a and 602b may be configured to communicate with backplanes 600 via interface servers 604a and 604b, respectively. The communications device 606a may be configured to communicate via backplane 600b via a plurality of protocols.

In operation, if the RTP streams may not be desired for delivery to a shadow device, such as via communications device 602a, the shadow device can subscribe with the communications server 610 to receive just the signaling data. The communications device 602a can accomplish this by registering in the "no media mode" and either dependent or independent dependency mode.

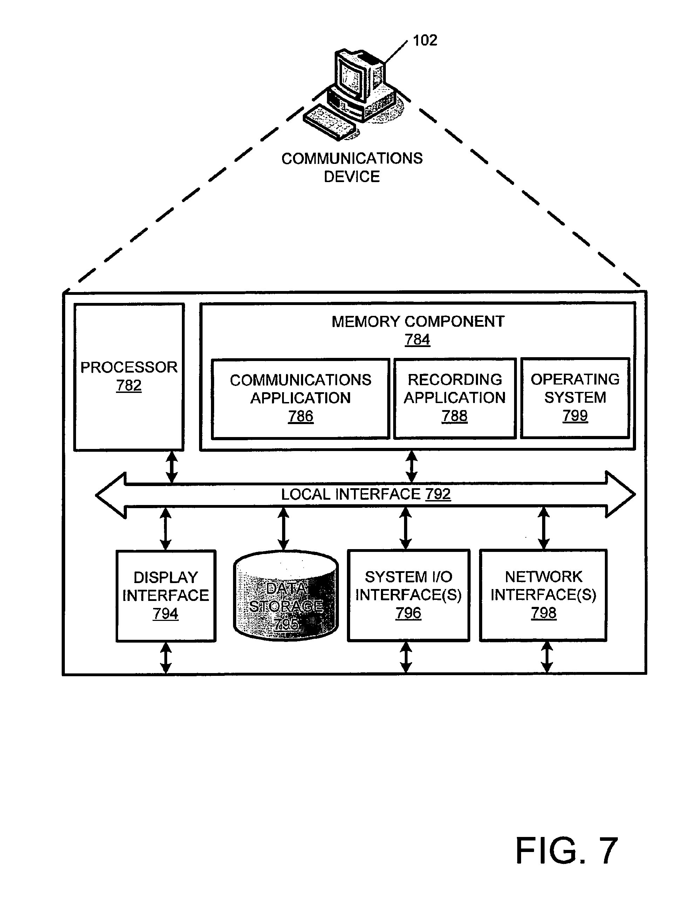

FIG. 7 is a block diagram illustrating a plurality of components that may be utilized in a communications device, such as a communications device from FIG. 1. Although a wire-line device is illustrated, this discussion can be applied to wireless devices, as well. Generally, in terms of hardware architecture, as shown in FIG. 7, the communications device 102 may include a processor 782, a memory component 784 (which may include volatile and/or nonvolatile memory components), a display interface 794, a data storage component 795, one or more input and/or output (I/O) device interface(s) 796, and/or one or more network interface 798 that are communicatively coupled via a local interface 792. The local interface 792 can include, for example but not limited to, one or more buses or other wired or wireless connections. The local interface 792 may have additional elements, which are omitted for simplicity, such as controllers, buffers (caches), drivers, repeaters, and receivers to enable communications. Further, the local interface 792 may include address, control, and/or data connections to enable appropriate communications among the aforementioned components. The processor 782 may be a device for executing software, particularly software stored in the memory component 784.

The processor 782 can be any custom made or commercially available processor, a central processing unit (CPU), an auxiliary processor among several processors associated with the communications device 102, a semiconductor based microprocessor (in the form of a microchip or chip set), a macroprocessor, or generally any device for executing software instructions.

The memory component 784 can include any one or combination of volatile memory elements (e.g., random access memory (RAM, such as DRAM, SRAM, SDRAM, etc.)) and/or nonvolatile memory elements (e.g., ROM, hard drive, tape, CDROM, etc.). Moreover, the memory component 784 may incorporate electronic, magnetic, optical, and/or other types of storage media. One should note that some embodiments of the memory component 784 can have a distributed architecture (where various components are situated remotely from one another), but can be accessed by the processor 782.

The software in memory component 784 may include one or more separate programs, each of which includes an ordered listing of executable instructions for implementing logical functions. In the example of FIG. 7, the software in the memory component 784 may include an operating system 799 and a communications application 786 and a recording application 788. The operating system 799 may be configured to control the execution of other computer programs and provide scheduling, input-output control, file and data management, memory management, and communication control and related services.

A system component and/or module embodied as software may also be constructed as a source program, executable program (object code), script, or any other entity comprising a set of instructions to be performed. When constructed as a source program, the program is translated via a compiler, assembler, interpreter, or the like, which may or may not be included within the memory component 784, so as to operate properly in connection with the operating system 799.

The Input/Output devices that may be coupled to system I/O Interface(s) 796 may include input devices, for example but not limited to, a keyboard, mouse, scanner, microphone, etc. Further, the Input/Output devices may also include output devices, for example but not limited to, a printer, display, speaker, etc. Finally, the Input/Output devices may further include devices that communicate both as inputs and outputs, for instance but not limited to, a modulator/demodulator (modem for accessing another device, system, or network), a radio frequency (RF) or other transceiver, a telephonic interface, a media duplication system, a router, etc.

Additionally included are one or more network interfaces 798 for facilitating communication with one or more other devices. More specifically, a network interface 798 may include any component configured to facilitate a connection with another device. While in some embodiments, among others, the communications device 102 can include a network interface 798 that includes a Personal Computer Memory Card International Association (PCMCIA) card (also abbreviated as "PC card") for receiving a wireless network card, this is a nonlimiting example. Other configurations can include the communications hardware within the computing device, such that a wireless network card is unnecessary for communicating wirelessly. Similarly, other embodiments include network interfaces 798 for communicating via a wired connection. Such interfaces may be configured with Universal Serial Bus (USB) interfaces, serial ports, and/or other interfaces.

If communications device 102 includes a personal computer, workstation, or the like, the software in the memory component 784 may further include a basic input output system (BIOS) (omitted for simplicity). The BIOS is a set of software routines that initialize and test hardware at startup, start the operating system 799, and support the transfer of data among the hardware devices. The BIOS is stored in ROM so that the BIOS can be executed when the communications device 102 is activated.

When communications device 102 is in operation, the processor 782 may be configured to execute software stored within the memory component 784, to communicate data to and from the memory component 784, and to generally control operations of the communications device 102 pursuant to the software. Software in memory, in whole or in part, may be read by the processor 782, perhaps buffered within the processor 782, and then executed.

One should note that while the description with respect to FIG. 7 includes a recording platform as a single component, this is a nonlimiting example. More specifically, in at least one embodiment, the communications device 102 can include a plurality of servers, personal computers, recorders, and/or other devices. Similarly, while the communications application 786, recording application 788 and the operating system 799 are each illustrated in FIG. 7 as single software components, this is also a nonlimiting example. In at least one embodiment, the recording application 788 may include one or more components, embodied in software, hardware, and/or firmware. Similarly, the communications application 786 may include one or more logical components. Additionally, while the communications application 786, recording application 788, and the operating system 799 are depicted as residing on a single computing device, these applications may include one or more components residing on one or more different devices.

Similarly, while the discussion with regard to FIG. 7 refers to a communications device 102, the above description may be applied to other components discussed herein. More specifically, the communications server, interface server, a recorder (not shown) and/or other components may include similar elements and/or operate similarly.

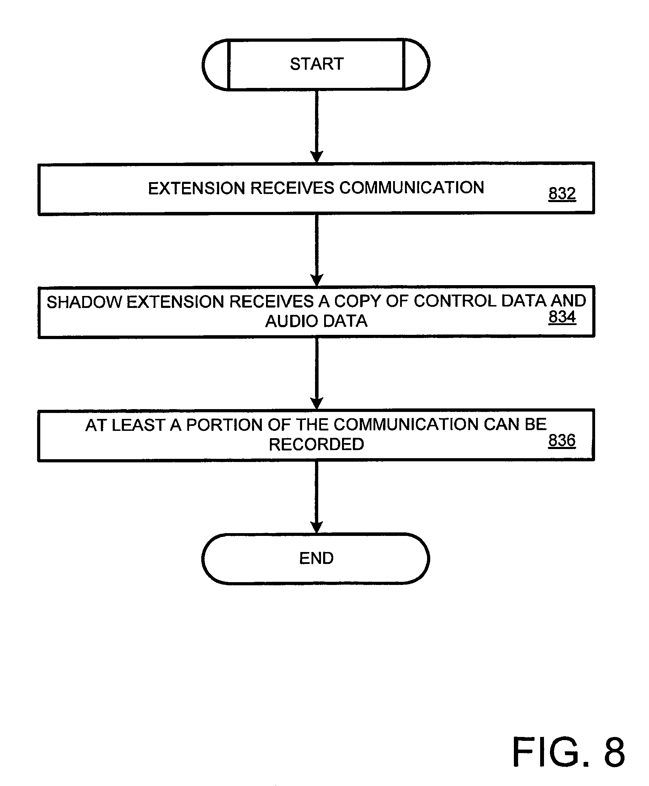

FIG. 8 is a flowchart illustrating an exemplary process that may be utilized for a shadow extension receiving communications data. As illustrated in the nonlimiting example of FIG. 8, an extension can receive a communication (block 832). A shadow extension can receive a copy of control data and audio data associated with the communication (block 834). At least a portion of the communication can then be recorded (block 836).

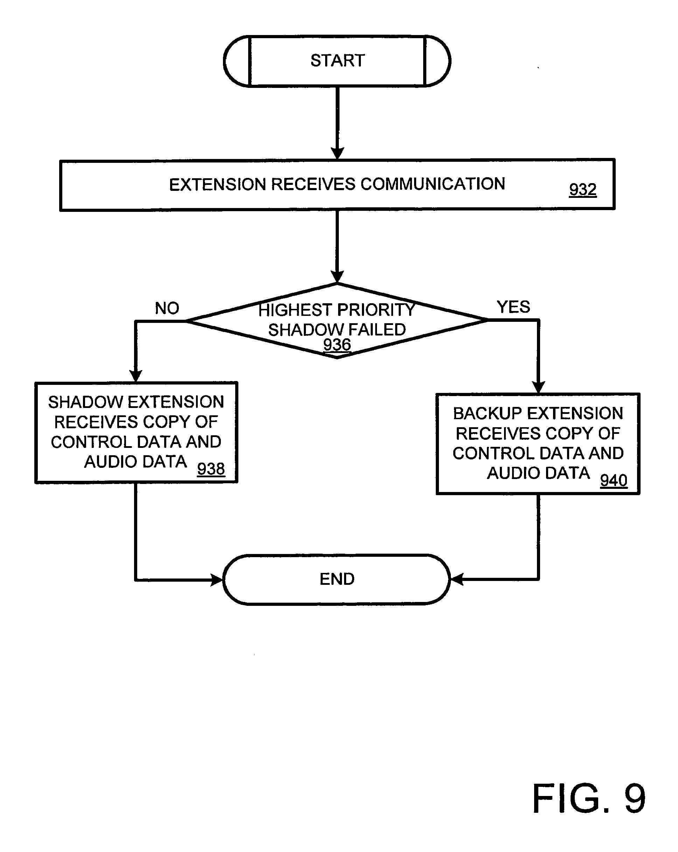

FIG. 9 is a flowchart illustrating an exemplary process that may be utilized for determining priority of an extension, similar to the flowchart from FIG. 8. As illustrated in the nonlimiting example of FIG. 9, an extension receives a communication (block 932). A determination is then made whether the highest priority shadow device has failed (block 936). If the highest priority shadow device has not failed, the shadow extension receives a copy of the control data and audio data for recording (block 938). If, on the other hand, the shadow device has failed, a backup shadow extension receives a copy of the control data and the audio data (block 940).

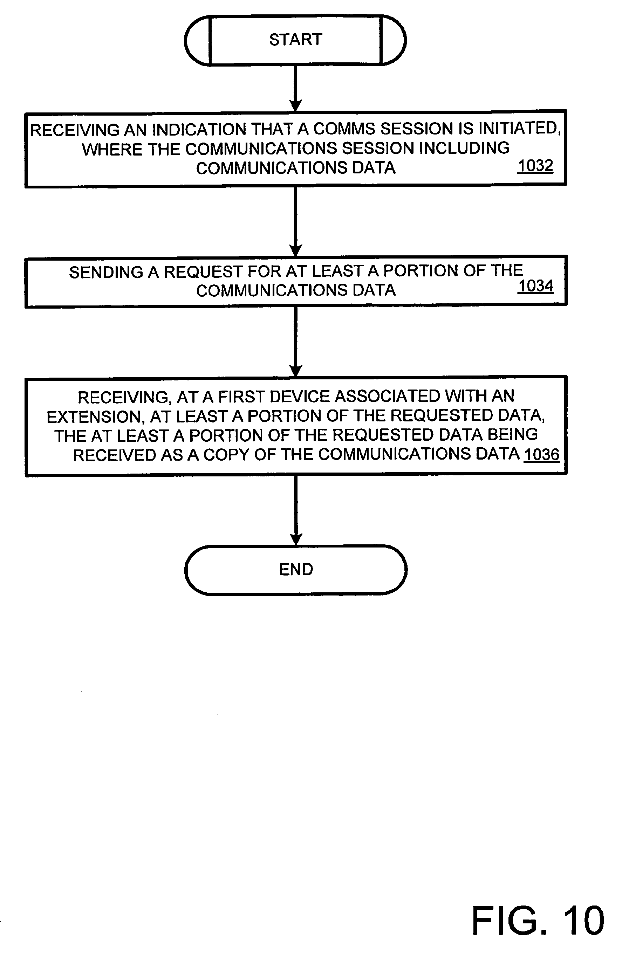

FIG. 10 is a flowchart illustrating a process that may be utilized for receiving data related to an extension, similar to the diagram from FIG. 8. As illustrated in the nonlimiting example of FIG. 10, a recording application can receive an indication that a communication session is initiated, the communication session including communications data (block 1032). The recording application can send a request for at least a portion of the communications data (block 1034). The recording application can receive, at a first device associated with an extension, at least a portion of the requested data, the portion of the requested data being received as a copy of the communications data (block 1036). Additionally, in at least one embodiment, the copy of the communications data is received at a second device, the second device being associated with the extension.

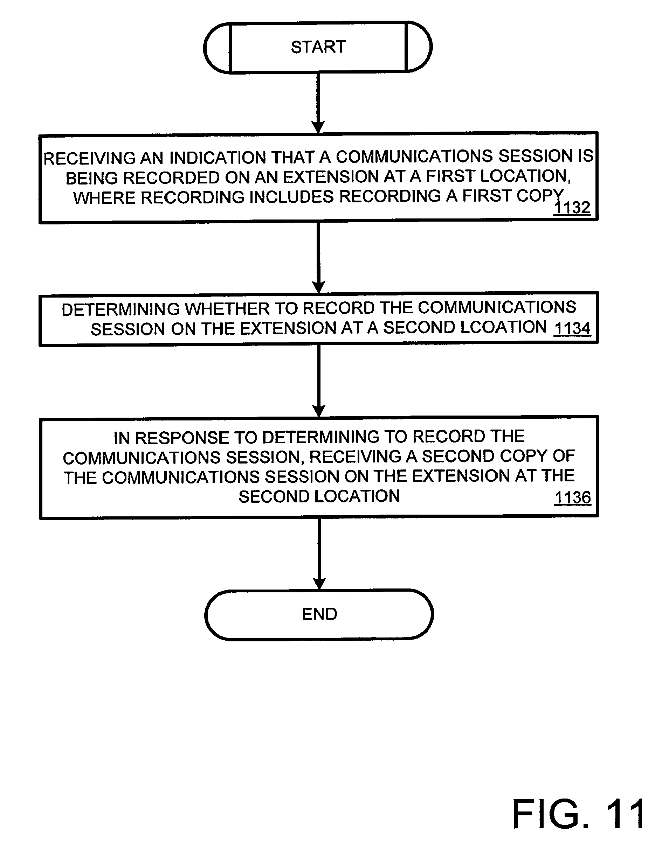

FIG. 11 is a flowchart illustrating a process that may be utilized for recording data at an extension, similar to the flowchart from FIG. 10. More specifically, as illustrated in the nonlimiting example of FIG. 11, a recording application can receive an indication that a communication session is being recorded on an extension (a channel, and/or data stream) at a first location, where recording on the extension includes recording a first copy of the communication session (block 1132). The recording application can determine whether to record the communication session on the extension at a second location (block 1134). While in at least one exemplary embodiment, this determination can be made based on whether there has been a failure of the recording of the first copy, some embodiments may be configured to determine whether network resources are better utilized by recording at the second location. Regardless, the recording application can, in response to determining to record the communication session on the extension at the second location, receive a second copy of the communication session on the extension at the second location (block 1136). Similarly, in some embodiments an association between a first and a second extension, channel, and/or data stream may be made. This association may facilitate recording on the second extension, channel and/or data stream.

It should be noted that embodiments of one or more of the systems described herein could be used to perform an aspect of speech analytics (i.e., the analysis of recorded speech or real-time speech), which can be used to perform a variety of functions, such as automated call evaluation, call scoring, quality monitoring, quality assessment and compliance/adherence. By way of example, speech analytics can be used to compare a recorded interaction to a script (e.g., a script that the agent was to use during the interaction). In other words, speech analytics can be used to measure how well agents adhere to scripts, identify which agents are "good" sales people and which ones need additional training. As such, speech analytics can be used to find agents who do not adhere to scripts. Yet in another example, speech analytics can measure script effectiveness, identify which scripts are effective and which are not, and find, for example, the section of a script that displeases or upsets customers (e.g., based on emotion detection). As another example, compliance with various policies can be determined. Such may be in the case of, for example, the collections industry where it is a highly regulated business and agents must abide by many rules. The speech analytics of the present disclosure may identify when agents are not adhering to their scripts and guidelines. This can potentially improve collection effectiveness and reduce corporate liability and risk.

In this regard, various types of recording components can be used to facilitate speech analytics. Specifically, such recording components can perform one or more of various functions such as receiving, capturing, intercepting and tapping of data. This can involve the use of active and/or passive recording techniques, as well as the recording of voice and/or screen data.

It should be noted that speech analytics can be used in conjunction with such screen data (e.g., screen data captured from an agent's workstation/PC) for evaluation, scoring, analysis, adherence and compliance purposes, for example. Such integrated functionality can improve the effectiveness and efficiency of, for example, quality assurance programs. For example, the integrated function can help companies to locate appropriate calls (and related screen interactions) for quality monitoring and evaluation. This type of "precision" monitoring improves the effectiveness and productivity of quality assurance programs.

Another aspect that can be accomplished involves fraud detection. In this regard, various manners can be used to determine the identity of a particular speaker. In some embodiments, speech analytics can be used independently and/or in combination with other techniques for performing fraud detection. Specifically, some embodiments can involve identification of a speaker (e.g., a customer) and correlating this identification with other information to determine whether a fraudulent claim for example is being made. If such potential fraud is identified, some embodiments can provide an alert. For example, the speech analytics of the present disclosure may identify the emotions of callers. The identified emotions can be used in conjunction with identifying specific concepts to help companies spot either agents or callers/customers who are involved in fraudulent activities.

Referring back to the collections example outlined above, by using emotion and concept detection, companies can identify which customers are attempting to mislead collectors into believing that they are going to pay. The earlier the company is aware of a problem account, the more recourse options they may have. Thus, the speech analytics of the present disclosure can function as an early warning system to reduce losses.

Additionally, included in this disclosure are embodiments of integrated workforce optimization platforms, as discussed in U.S. Patent Application No. 11/359,356, filed on February 22, 2006, entitled "Systems and Methods for Workforce Optimization," U.S. Patent Application No. 11/540,185, filed on September 29, 2006, entitled "Systems and Methods for facilitating Contact Center Coaching," and U.S. Patent Application No. 60/909,060, filed on March 30, 2007, entitled "Systems and Methods for Integrating Customer Center Operations Based on Customer Input," all of which are hereby incorporated by reference in their entireties. At least one embodiment of an integrated workforce optimization platform integrates: (1) Quality Monitoring/Call Recording - voice of the customer; the complete customer experience across multimedia touch points; (2) Workforce Management - strategic forecasting and scheduling that drives efficiency and adherence, aids in planning, and helps facilitate optimum staffing and service levels; (3) Performance Management - key performance indicators (KPIs) and scorecards that analyze and help identify synergies, opportunities and improvement areas; (4) e-Learning - training, new information and protocol disseminated to staff, leveraging best practice customer interactions and delivering learning to support development; (5) Analytics - deliver insights from customer interactions to drive business performance; (6) Coaching - feedback to promote efficient performance; and/or (7) Survey - receipt and review of customer feedback and analysis of interactions from customer perspective. By way of example, the integrated workforce optimization process and system can include planning and establishing goals - from both an enterprise and center perspective - to ensure alignment and objectives that complement and support one another. Such planning may be complemented with forecasting and scheduling of the workforce to ensure optimum service levels. Recording and measuring performance may also be utilized, leveraging quality monitoring/call recording to assess service quality and the customer experience. A survey can be provided in order to obtain customer feedback regarding a customer's experience with the customer center.

One should note that the flowcharts included herein show the architecture, functionality, and/or operation of a possible implementation of software. In this regard, each block can be interpreted to represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

One should note that any of the programs listed herein, which can include an ordered listing of executable instructions for implementing logical functions (such as depicted in the flowcharts), can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, or device. More specific examples (a nonexhaustive list) of the computer-readable medium could include an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of the certain embodiments of this disclosure can include embodying the functionality described in logic embodied in hardware or software-configured mediums.

It should be emphasized that the above-described embodiments are merely possible examples of implementations, merely set forth for a clear understanding of the principles of this disclosure. Many variations and modifications may be made to the above-described embodiments without departing substantially from the spirit and principles of the disclosure. All such modifications and variations are intended to be included herein within the scope of this disclosure.

## Claims

1. A method for multi-stream recording, comprising:
receiving an indication that a communication session is initiated, the communication session including communications data, the communications data being received at a communications device at an extension;
sending a request for at least a portion of the communications data; and
receiving, at a recording device associated with the extension, at least a portion of the requested data, the at least a portion of the requested data being received as a copy of the communications data.

2. The method of claim 1, wherein the recording device is located at a remote location from the a communications device participating in the communications session.

3. The method of claim 1, wherein the copy of the communications data is modified prior to receiving the requested data.

4. The method of claim 1, further comprising recording at least a portion of the received data.

5. The method of claim 4, wherein a backup copy of the requested data is recorded.

6. The method of claim 1, further comprising sending an indicator to receive only control data associated with the communication session.

7. A system for multi-stream recording, comprising:
a first communications device configured to participate in a communications session;
a second communications device configured to participate in the communications session with the first communications device on an extension; and
a shadow device, operably separate from the second communications device, the shadow device configured to record at least a portion of the communications session on the extension.

8. The system of claim 7, wherein the copy of the communications session is modified prior to receiving the requested data.

9. The system of claim 7, wherein the shadow device includes a sending component configured to send an indicator to receive only control data associated with the communication.

10. A method for selective multi-stream recording, comprising:
receiving an indication that a communications session is initiated on a first extension at a first location, wherein the first extension receives a first copy of the communications session;
associating a second extension with the first extension;
determining whether to record the communications session from the first extension on the second extension at a second location; and
in response to determining to record the communications session on the second extension at the second location, receiving a second copy of the communications session on the second extension at the second location.

11. The method of claim 10, wherein the first copy of the communications data is an original version of the communications session.

12. The method of claim 11, wherein the second copy of the communications data is a version derived from the original version of the communications session.

13. The method of claim 10, further comprising determining whether a recording device on the second extension at the second location has failed and, in response to determining that the recording device on the second extension at the second location has failed, receiving a copy of the communications session on a third extension.

14. The method of claim 10, wherein determining whether to record the communications session on the second extension at the second location includes determining whether network bandwidth constraints indicate more efficient use of network resources by recording on the second extension at the second location.

15. The method of claim 10, further comprising determining whether to modify the second copy and, in response to determining to modify the second copy, sending an indication to send at least a portion of the second copy to a third location for modification.
